# EUROPEAN PATENT APPLICATION

(11) **EP 0 962 722 A2**
(43) Date of publication of application: **08.12.1999**
(21) Application number: 99660104.3
(22) Date of filing: 04.06.1999
(51) Int. Cl.: F24F 13/28

(54) **Bag filter for air-conditioning equipment.**

(30) Priority: 05.06.1998 FI 981287
(71) Applicant: Saimanen, Matti, 02700Kauniainen (FI)
(72) Inventor: The designation of the inventor has not yet been filed
(74) Representative: Brax, Matti Juhani

(57) **Abstract**

The invention relates to a bag filter for automatic air-conditioning equipment. In the prior art bag filters the filters with a plurality of bags are fastened to a metal profile section. It is the objective of this invention to provide an environmentally friendly bag filter, which is cheap and easy to dispose of. According to the invention, the frame of the bag filter is entirely made of material which can be burnt or otherwise easily disposed of, such as wooden battens, sawmill waste, hardboard, pulp and/or recyclable plastic. Two opposite sides of the frame are provided with slots (5) for fastening the mouth edge (6) of two adjacent walls of two adjacent bags (8) to the frame. The mouth edges (6) of adjacent bags (8) are attached to at least one lath (10) made of rigid material. The bags are fastened to the slots (5) at the ends of the mouth edges and the lath(s) fastened to them. The slots opening to the side (3a) of the frame are covered e.g. with a covering strip (13) reaching over the slots.

## Description

The invention relates to a bag filter for air-conditioning equipment, particularly a bag filter according to the preamble of Claim 1.

Bag filters are today generally used in automatic air-conditioning equipment. They comprise a rectangular section and a filter attached to it, with a plurality of bags made of synthetic fibre material or glass fibre material for finer filtering. The filter with multiple bags comprises at least two other, but generally from six to ten or more filter bags, and the upper edges of adjacent bags, or the front edges in the direction of the flow are joined together, and these front edges are fastened to a section, which is sized to suit the size of the mouths of the bags.

The section is generally formed of two nested profiles, to which the bag construction is fastened with pop rivets, and it is made of aluminium or steel. The section is thus relatively expensive, because both the raw material costs and the manufacturing costs are considerable. The filter bags can be disposed of by burning, but the section is difficult to dispose of.

It is the objective of this invention to provide an environmentally friendly bag filter, which is essentially cheaper and easy to dispose of. This is achieved by giving the above defined bag filter the characteristic features specified in the characterizing part of Claim 1.

Thus the frame of the bag filter according to the invention is entirely made of material which can be burnt or otherwise easily disposed of, such as cheap kinds of wood, sawmill waste, plywood, hardboard, pulp, glued wood and/or biodegradable plastic or the like. The construction of the filter frame is such that on two opposite sides of the frame, to which the the ends of the mouths of the filter bags are fastened, there are slots for fastening the ends of the mouth edges of adjacent sides of each two adjacent bags to the frame. These mouth edges are attached to at least one lath made of rigid material, such as hardboard, whereby the ends of the mouth edges together with the lath fastened to the mouth edges are placed into two opposite slots by pressing, and at least the back ends of the slots, in the direction of the flow, are covered by a device reaching over the slots. This filter bag is disposable.

In the preferred embodiment of the bag filter, the slots on two opposite sides of the frame go through the frame in the direction of the flow, and said back ends of the slots are covered with a strip made of hardboard, for instance, and fastened to the surface of the frame side preferably by glueing or stapling, whereby the mouth edges of the filter bags together with the lath(s) are locked into the slots in the direction of the flow.

According to another preferred embodiment, both ends of the slots are covered with continuous hardboard strips reaching over the slots.

According to another preferred embodiment, the front ends of the slots open to the surface of the frame side and the back ends end at a distance from the opposite surface of the frame side, whereby the mouth edges of the filter bags are locked in the slots in the direction of the strain caused by the flow.

According to another embodiment, the mouth edges of two adjacent walls of each two adjacent filter bags are fastened between two laths made of rigid material, which laths together with the ends of the mouths of the filter bags reach into the opposite slots. The edges of the mouths are preferably stapled to the laths.

According to another preferred embodiment, the mouth edges of two adjacent walls of two adjacent filter bags are by seaming, for instance, formed as a channel, into which a lath has been slipped, which lath together with the ends of the mouth edges reaches into the opposite slots.

According to another preferred embodiment, the side edges of the filter bags in the direction of the flow and the transverse bottom edge have been closed by seaming, glueing, melting or in a like manner.

According to another preferred embodiment, the filter bags are made of continuous bag material, whereby the adjacent bags are formed of folded material, and the bottom edges of the bags and the mouth edges of two adjacent walls are already closed.

According to another preferred embodiment, the frame of the bag filter is made of pulp or biodegradable plastic by press moulding or mould casting.

The bag filter according to the invention is a very economical and environmentally friendly product. It is made of cheap raw material by simple manufacturing methods, and it can be entirely burnt or left to decompose.

Possible raw materials for the frame include cheap kinds of wood, sawmill waste, plywood, hardboard, press moulded pulp and/or biodegradable plastic, such as recyclable plastic. In the construction according to the invention, the filter section of the prior art has been replaced by a mere frame, which lacks the inner grating for fastening the filter bags. In the construction according to the invention, the mouths of the filter bags are fastened between two laths or one lath is slipped into a channel formed in the mouth edge of two adjacent walls. These laths can be made of hardboard or plastic or similar cheap material. The ends of the mouth edges of the filter bags are placed together with one or more rigid laths to the slots on opposide sides of the frame. The ends of the mouth edges are locked in the slots partly by means of friction, because the lath(s) and the bag material are pressed together into the suitably sized slot, and partly by means of a device which covers the slot and prevents the filter bag from being detached from the frame. The purpose of the lath(s) is also to replace the grating of the prior art filter section and to stiffen the mouths of the filter bags to form a grate-like construction. The purpose of the two laths fastened on both sides of two mouth edges is also to press the mouth edges between them to form a very thin construction in order to minimize the flow resistance.

It is substantially simpler to manufacture a bag filter according to the invention than a prior art filter bag with the grating section. The slots are made on the two opposite sides of the frame with a suitable machine tool, and the four sides of the frame are composed to a frame by riveting the ends together, for example. If the slots go through the frame and open to the opposite surfaces of the frame, both surfaces are preferably covered with strips made of hardboard, for instance, which are glued in place.

The non-woven filter bags are manufactured in the same manner as the prior art filter bags, by seaming, for instance. The laths to be fastened to the mouth edges of the filter bags are cut to size from a hardboard sheet and fastened e.g. by glueing or stapling to the mouth edge of two adjacent walls to be joined together, on both sides of the mouth or slipped into a channel formed on this edge. This is a fast and simple procedure. If the lath is made wider, or higher than the height of the slot, the end of the lath must be notched. A wider lath fastens and presses the mouth edges of the filter bags better together, but notching the ends of the laths is a laborious step.

When the filter bag frame is made of pulp or plastic, manufacturing takes place by mould casting, whereby the result is a complete frame or frame sides with slots.

The price of a frame for a bag filter according to the invention will be only a small part of the price of the prior art bag filter. In addition, the bag filter according to the invention can be disposed of by burning after use, whereas the prior art bag filter is waste, the treatment of which also causes costs.

In the following, the invention will be described in more detail by means of two examples of preferred embodiments with reference to the accompanying drawings, in which
- Figure 1: shows a prior art bag filter as a 3D image.
- Figure 2: is a partial 3D image of the bag filter frame according to the invention from its corner, with the covering strips partially cut off,
- Figure 3: is a vertical section of a side of the frame with slots at the slot and the stiffening lath placed in it, with a part of the lath cut off.
- Figure 4: is a vertical section of a part of the filter bag, with one bag and its two mouth edges with the stiffening laths, and
- Figure 5: is a vertical section of a part of the filter bag according to the second embodiment, with a channel formed in the mouth edge and a stiffening lath slipped into it.

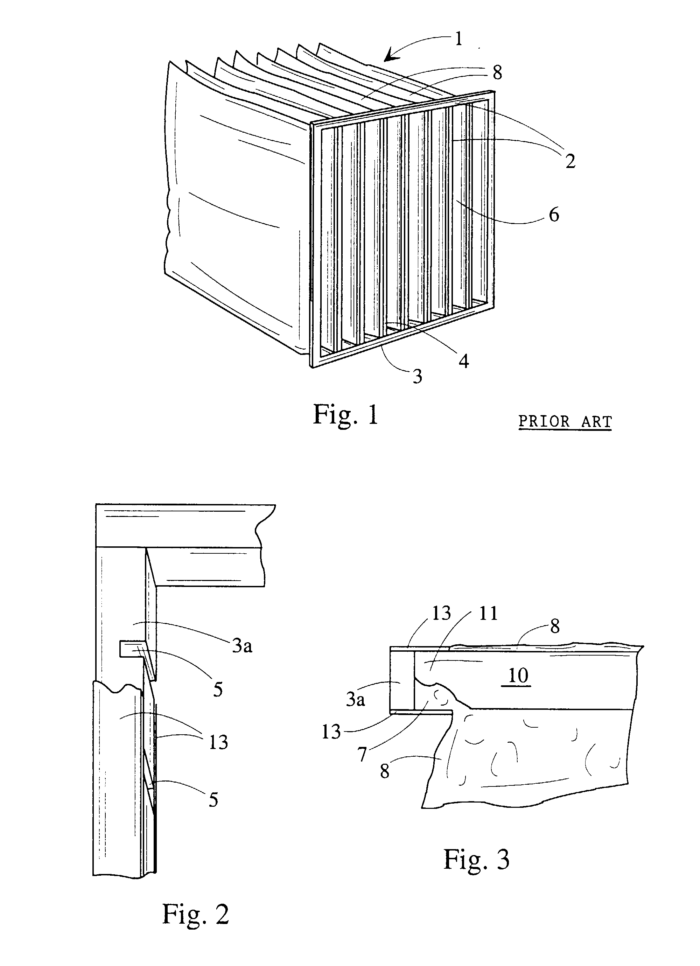

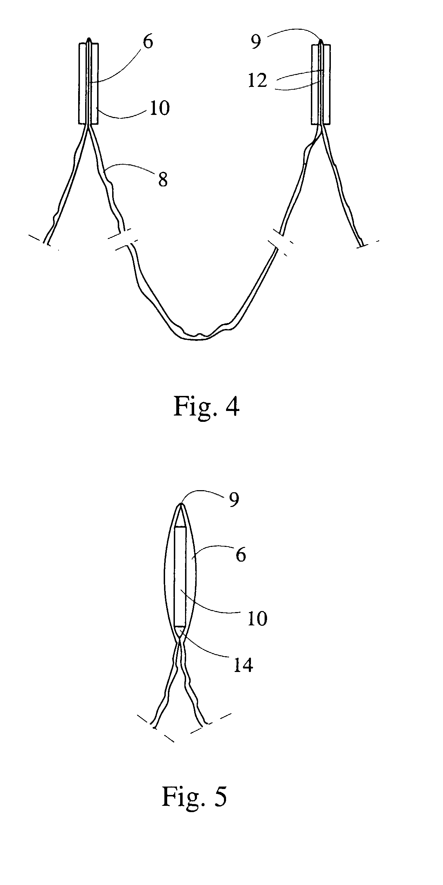

The bag filter in Figure 1 represents the prior art. The filter with a plurality of bags, marked with number 1, is at the mouth 6 of each filter bag 8 fastened to a section 2, which comprises a frame 3 and a grating 4. The bag filter according to the invention has a similar filter as the prior art, but it differs from it with regard to the section 2. The section 2 is replaced by a mere frame 3. Two opposite sides 3a of the frame 3, of which only one side is shown in Figure 2, have slots 5, to which the ends 7 of the mouth edges 6 of the filter bags have been fastened, Figure 3. The adjacent mouth edges of adjacent filter bags 8 have been fastened together by a seam 9. A stiffening lath 10 has been fastened on both sides of the mouth edge 6 by stapling or glueing, for example, Figure 4. The stiffening laths reach from one end 7 of the mouth edge 6 of the filter bag to the other end. The ends of the upper edges of the filter bags comprise two laths 10 and two filter bag walls 12 between them, and they press into the opposite slots 5 and are thus fixed to the frame 3. The laths 10 fastened to the mouth edge 6 press the walls 12 of the filter bag 8 together and thus reduce the flow resistance formed by the mouth openings 6. For the same reason, the laths must be as thin as possible, from 1 to 2 mm depending on the material. The laths must also be rigid so that they stiffen the mouth openings 6 in a similar manner as the grates 4 of the prior art construction.

According to the second embodiment Figure 5, which is more advantageous with regard to manufacturing technology, the lath 10 can be slipped into a channel formed on the mouth edge 6. In that case, only one lath 10 is needed, and slipping the lath into the channel formed in the mouth edge 6 is a simple procedure. Forming the channel by seaming, for instance, is also a faster procedure than fastening two laths on the mouth opening.

The slots 5, to which the filter bags 8 are fastened, can reach through the frame 3a, Figure 2, or they can end at a small distance from one side of the frame or its both sides. When the slot 5 runs through the frame 3a, both ends of the slot are closed by e.g. a covering strip 13, which covers the opposite surfaces of the frame. The slot 5 can be formed to end at a distance from the other side of the frame, preferably the back side in the direction of the flow. The opposite side of the frame, to which the front ends of the slots open, is preferably covered with a covering strip 13. The slot can be formed to end at its both ends at a distance from the sides of the frame, whereby the fastening of the filter 1 to the frame is entirely dependent on the fastening of the ends 7 of the mouth openings of the filter bags and the ends 11 of the laths to the slot 5. In addition to press moulding, glueing can then be used, for instance. In this case, the covering strips 13 are not needed at all.

When wood is used as raw material for the frame, the sides 3, 3a of the frame are manufactured separately, and slots 5 are made on two sides 3a with a suitable machine tool. Slots 5 that go through the frame are made with a circular saw, for example. The sides of the frame are fastened together to form a frame 3 by some known manner which suits the choice of material.

The filter bags 8, which are prior art as such, are preferably made of a continuous fibre material web. The web is folded to folds the size of the bags, and the edges of the bags are seamed preferably with a seaming machine. The laths 10 are fastened to both sides of the mouth openings 6 of the bags by glueing or stapling. The filter bags are preferably fastened to a finished frame, but it is also possible to fasten them to separate frame sides 3a. The filter bags are fastened by pushing and pressing the ends 11 of the laths 10 into the slots 5. If required, one or two covering strips 13 are then fastened on one or both sides of the frame 3a.

The fibre material web is preferably a non-woven fibre mat made of synthetic fibres. A glass fibre web is used for finer filtering. The mat is of very airy construction, and is thus compressible. It can be seamed by a seaming machine, and it is easy to glue or hot-melt.

According to the alternative embodiment shown in Figure 5, the channel 14 is formed on the mouth edge of adjacent bags 8 preferably with a seaming machine. The lath 10 is pushed into the channel 14. After that, the filter bags are fastened to the frame in the manner described above.

The bag filter frame according to the invention is placed in the output of the blower of an air-conditioning machine in the same manner as the prior art bag filter

From the above description it can be seen how the bag filter according to the invention is made from cheap raw materials in a very simple manner. It will also be clear that in addition to the above mentioned raw materials, there are also other materials suitable for the purpose, and that bag filters can also be manufactured by other known and suitable methods.

## Claims

1. A bag filter for air-conditioning equipment, which bag filter comprises a frame (3) and filter bags (1) of fibrous material fastened to it, which frame has two opposite parallel sides (3a) and two opposite sides (3) connecting the sides (3a), to which the ends (7) of the mouths of the bags are fastened, **characterized** in that the frame (3) is entirely made of burnable material or material which is otherwise easy to dispose of, such as wooden battens, sawmill waste, plywood, hardboard, glued wood, pulp and/or biodegradable plastic or similar material; that there are slots (5) on the sides (3a) of the frame for fastening the mouth openings (6) of two adjacent walls of two adjacent bags (8) to the frame (3), that said mouth openings (6) are attached to at least one lath (10) made of rigid material, and the ends thereof (7) are together with said at least one lath (10) placed into two opposite slots (5) of the frame (3) by pressing, that the slots are at least at the back end in the direction of the flow covered with a device (13) reaching over the slots to lock the filter bags (8) to the frame (3), and that the bag filter is disposable.

2. A bag filter according to Claim 1, **characterized** in that the slots (5) run through the frame side (3a) in the direction of the flow, and that the device which covers said back ends of the slots is a covering strip (13) made of hardboard, for instance, fastened to the surface of the frame side.

3. A bag filter according to Claim 2, **characterized** in that the front ends of the slots (5) are also covered with a continuous device which covers the frame side (3a), such as a covering strip (13) made of hardboard.

4. A bag filter according to Claim 1 or 2, **characterized** in that the front ends of the slots (5) open to the surface of the frame side (3a), and the back ends end at a distance from the opposite surface of the frame side (3a).

5. A bag filter according to any one of the preceding claims, **characterized** in that the mouth edges (6) of two adjacent filter bags (8) are fastened between two laths (10) made of rigid material, and that the laths together with the ends (7) of the mouth edges (6) of the filter bags (8) reach into the opposite slots (5).

6. A bag filter according to Claim 5, **characterized** in that the laths (10) are for their full length fastened to the mouth opening (6) of the filter bags (8).

7. A bag filter according to any one of the claims 1 to 4, **characterized** in that the mouth edges (6) of two adjacent filter bags (8) are joined to form a channel (14), into which a lath (10) has been slipped, which lath together with the ends (7) of the mouth edges of the filter bags reaches into the opposite slots (5).

8. A bag filter according to any one of the preceding claims, **characterized** in that the side edges of the filter bags (8) in the direction of the flow and the transverse bottom edge have been closed by seaming, glueing, melting or in a like manner.

9. A bag filter according to any one of the preceding claims, **characterized** in that the filter bags (8) are made of continuous bag material, whereby the bottom edge of the bags and the mouth edge of two adjacent walls of each two adjacent bags are closed.

10. A bag filter according to any one of the preceding claims, **characterized** in that the frame (3) of the bag filter is made of pulp or biodegradable plastic by press moulding or mould casting.
